# EUROPEAN PATENT APPLICATION

(11) **EP 2 947 600 A1**
(43) Date of publication of application: **25.11.2015**
(21) Application number: 15168333.1
(22) Date of filing: 20.05.2015
(51) Int. Cl.: G06F 21/74

(54) **PORTABLE ELECTRONIC DEVICE, PROGRAM, TERMINAL DEVICE AND METHOD OF CONTROLLING DECODING OF DATA**

(30) Priority: 20.05.2014 JP 2014104654; 28.08.2014 JP 2014174463
(71) Applicant: Kabushiki Kaisha Toshiba, Minato-ku Tokyo 105-8001 (JP)
(72) Inventor: Shiga, Akinori, Tokyo, Tokyo 105-8001 (JP)
(74) Representative: Horn Kleimann Waitzhofer Patentanwälte PartG mbB

(57) **Abstract**

A portable electronic device of an embodiment has a storage section, a storage controller, and a decoding controller. The storage section has a first area to store first corresponding information indicating first identification information to identify data and first decoding information relating to decoding corresponding to the first identification information, and a second area to store second corresponding information indicating second identification information to identify data and second decoding information relating to decoding corresponding to the second identification information. The storage controller stores the second corresponding information in the second area. The decoding controller, when identification information to identify data included in a command received from an outside is included in the second corresponding information stored in the second area, controls decoding of the data included in the command, based on the second decoding information corresponding to the second identification information.

## Description

### FIELD

Embodiments of the present invention relate to a portable electronic device, a program, a terminal device and a method of controlling decoding of data.

### BACKGROUND

In a specification of the industry standard of a financial IC card, there is a description regarding a command of store data (STORE DATA) for writing data into an IC card. As an example of a specification of the industry standard of a financial IC card, there is EMV Card Personalization Specification Version 1.1 July 2007 (CPS). A terminal device presents a DGI (Data Grouping Identifier) that is an identifier of write data, and the write data, to an IC card, by a command of store data. In addition, some DGIs use a TLV (Tag-Length-Value) format, as a format for write data. In the TLV format, a tag (Tag), a length (Length) to express a length, a value (Value) to express a value are arranged in this order.

In the above-described specification, it is determined that each DGI of write data indicates whether or not the write data is to be encrypted. For this reason, an IC card judges whether or not the presented write data is encrypted, by DGI corresponding to the write data. And the IC card uniquely determines whether or not to decode the write data, in accordance with DGI in a command of store data.

In the above-described specification, an IC card can judge whether or not to decode write data, by only DGI. For this reason, when DGI indicates that write data is to be encrypted, in the specification, for example, even when a user desires to give priority to the processing speed, and does not desire to decode the write data in an IC card, the IC card decodes the write data in accordance with its DGI. Conversely, when DGI indicates that write data is not to be encrypted, in the specification, for example, even when a use desires to decode the write data in an IC card, in consideration of security, the IC card does not decode the write data in accordance with its DGI. That is, a user could not freely select whether or not to encrypt write data. Further, a user could not freely select an encryption method.

In addition, when a TLV format is used as a format for write data, a function to select whether to encrypt or not to encrypt (to use a plain text) data of Value of the TLV part, for each TLV part, was not provided in a terminal device and an IC card.

### [BRIEF DESCRIPTION OF THE DRAWINGS]

Fig. 1 shows a communication system of a first embodiment.
Fig. 2 shows an example of a configuration of a hardware of the IC card of the first embodiment.
Fig. 3 shows an example of variable corresponding information relating to DGI which is to be stored in the variable corresponding information storage area of the IC card of the first embodiment.
Fig. 4 shows an example of a configuration of a command to be transmitted from the terminal device to the IC card in the first embodiment.
Fig. 5 shows an example of a configuration of a command to be transmitted from the terminal device to the IC card in the first embodiment.
Fig. 6 shows an example of an aspect of data communication to be performed between the terminal device and the IC card in the first embodiment.
Fig. 7 is a flow chart showing an example of a procedure of a processing to be performed in the IC card of the first embodiment.
Fig. 8 shows an example of a configuration of a data part of a command including a TLV part in a second embodiment.
Fig. 9 shows another example of a configuration of a data part of a command including a TLV part in the second embodiment.
Fig. 10 shows an example of variable corresponding information relating to Tag which is to be stored in the variable corresponding information storage area of the IC card in the second embodiment.
Fig. 11 shows an example of a configuration of a command to be transmitted from the terminal device in the second embodiment to the IC card.
Fig. 12 shows an example of variable corresponding information relating to DGI and Tag in the second embodiment.
Fig. 13 shows another example of variable corresponding information relating to DGI and Tag in the second embodiment.
Fig. 14 shows an example of a configuration of a data part of a command to be transmitted from the terminal device to the IC card in the second embodiment.
Fig. 15 is a flow chart showing an example of a procedure of a processing to be performed in the IC card of the second embodiment.
Fig. 16 is a flow chart showing an example of a procedure of a processing to be performed in the IC card of the second embodiment.
Fig. 17 is an appearance view showing an example of the IC card of an embodiment.

### [EMBODIMENT TO PRACTICE THE INVENTION]

A portable electronic device of an embodiment has a storage section, a storage controller, and a decoding controller. The storage section has a first area to store first corresponding information indicating first identification information to identify data and first decoding information relating to decoding corresponding to the first identification information, and a second area to store second corresponding information indicating second identification information to identify data and second decoding information relating to decoding corresponding to the second identification information. The storage controller stores the second corresponding information in the second area. The decoding controller, when identification information to identify data included in a store data command received from an outside is included in the second corresponding information stored in the second area, controls decoding of the data included in the store data command, based on the second decoding information corresponding to the second identification information.

Hereinafter, a portable electronic device, a program, a terminal device and a method of controlling decoding of data of embodiments will be described with reference to the drawings. In the description below, an IC card is used as an example of a portable electronic device.

### (First Embodiment)

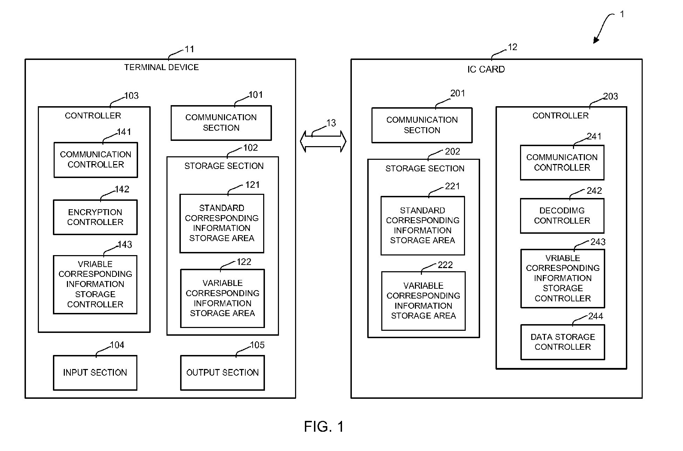

Fig. 1 shows a communication system 1 of an embodiment.

The communication system 1 is provided with a terminal device 11 and an IC card 12. The terminal device 11 and the IC card 12 communicate with each other, via a wired or wireless communication channel 13.

The terminal device 11 is provided with a communication section 101, a storage section 102, a controller 103, an input section 104, an output section 105. The controller 103 is provided with a communication controller 141, an encryption controller 142, and a variable corresponding information storage controller 143.

IC card 12 is provided with a communication section 201, a storage section 202, a controller 203. The controller 203 is provided with a communication controller 241, a decoding controller 242, a variable corresponding information storage controller 243, and a data storage controller 244.

The terminal device 11 will be described.

The terminal device 11 is a terminal device of a reader/writer to communicate with the IC card 12, and is an external terminal device for the IC card 12.

The communication section 101 communicates with the communication section 201 of the IC card 12, with a contact system or a contactless system.

The storage section 102 stores a program and various data in its area. For example, the storage section 102 is provided with a nonvolatile EEPROM (Electrically Erasable Programmable ROM) in which a storage content is rewritable, a RAM (Random Access Memory) which temporarily holds processing data when the controller 103 executes a processing, a ROM (Read Only Memory) which stores a program to be executed by the controller 103, and so on.

In the present embodiment, the storage section 102 has a standard corresponding information storage area 121 to store standard corresponding information, and a variable corresponding information storage area 122 to store variable corresponding information in the RAM. In addition, various memories may be used, as the memories to store the respective information. For example, an EEPROM may be used in place of a RAM. In addition, as the standard corresponding information and the variable corresponding information, information of an optional format may be used, and information of a table format may be used, for example.

The input section 104 receives an input of an instruction and an input of information by an operation performed by a user, or from an external device (here, a device other than the IC card 12).

The output section 105 outputs an instruction and information to a user or an external device (here, a device other than the IC card 12).

The controller 103 performs various processings and controls in the terminal device 11. The controller has a CPU (Central Processing Unit), and the CPU executes a program stored in an area of the storage section 102. By this means, the controller 103 performs various processings and controls, and the terminal device 11 performs various processings and controls by the controller 103.

The communication controller 141 controls the communication with the IC card 12. The communication controller 141 controls a processing to transmit various commands to the IC card 12 by the communication section 101, and a processing to receive various responses from the IC card 12 by the communication section 101. In addition, the command is generated by a command generating section (not shown) included in the controller 103.

The encryption controller 142 controls encryption of data.

The variable corresponding information storage controller 143 controls a processing to store variable corresponding information in the variable corresponding information storage area 122, a processing to erase variable corresponding information from the variable corresponding information storage area 122, and so on.

The IC card 12 will be described.

The IC card 12 interprets a command from the external terminal device 11, executes a processing according to the command, and responds a result of the processing to the terminal device 11.

The IC card 12 is provided with one IC chip which is embedded inside the IC card 12. The communication section 201, the storage section 202, and the controller 203 are formed in this IC chip.

The communication section 201 communicates with the communication section 101 of the terminal device 11 with a contact system or a contactless system.

The storage section 202 stores a program and various data in its area. For example, the storage section 202 is provided with a nonvolatile EEPROM in which a storage content is rewritable, a RAM which temporarily holds processing data when the controller 203 executes a processing, a ROM which stores a program to be executed by the controller 203, and so on.

In the present embodiment, the storage section 202 has a standard corresponding information storage area 221 to store standard corresponding information, and a variable corresponding information storage area 222 to store variable corresponding information, in the EEPROM. In addition, various memories may be used, as the memories to store the respective information. For example, a RAM may be used, in place of an EEPROM.

As a specific example, as a combination of the standard corresponding information storage area 221 and the variable corresponding information storage area 222, an area of an EEPROM and an area of an EEPROM, an area of an EEPROM and an area of a RAM, an area of a RAM and an area of an EEPROM, an area of a RAM and an area of a RAM, an area of a ROM and an area of an EEPROM, or an area of a ROM and an area of a RAM may be used.

The controller 203 performs various processings and controls in the IC card 12. The controller 203 has a CPU, and the CPU executes a program stored in an area of the storage section 203. By this means, the controller 203 performs various processings and controls, and the IC card 12 performs various processings and controls by the controller 203.

The communication controller 241 controls communication with the terminal device 11. For example, the communication controller 241 controls a processing to receive various commands from the terminal device 11 by the communication section 201, and a processing to transmit various responses to the terminal device 11 by the communication section 201. In addition, the response is generated by a response generating section (not shown) included in the controller 203.

The decoding controller 242 controls decoding of data.

The variable corresponding information storage controller 243 controls a processing to store variable corresponding information in the variable corresponding information storage area 222, and a processing to erase variable corresponding information from the variable corresponding information storage area 222, and so on.

The data storage controller 244 controls, with respect to the data (write data) received from the terminal device 11, a processing to store the data in the storage section 202, and a processing to erase the data from the storage section 202.

As the communication system between the terminal device 11 and the IC card 12, any of a contact system and a contactless system may be used.

In a contact system, the terminal device 11 and the IC card 12 communicate with each other, in a state that a metal contact point provided on the terminal device 11 is in contact with a contact point provided on the IC card 12. In this case, a conductive route (wired route) connecting the terminal device 11 and the IC card 12 forms the communication channel 13.

In a contactless system, the terminal device 11 and the IC card 12 communicate with each other, by electromagnetic induction between an antenna (a loop antenna, for example) provided in the terminal device 11, and an antenna (a loop antenna, for example) provided in the IC card 12. In this case, a route in the air (wireless route) where the electromagnetic induction is conducted forms the communication channel 13.

The terminal device 11 transmits a command to the IC card 12 via a UART (Universal Asynchronous Receiver Transmitter), in accordance with a specific protocol, in order to perform reading of the information stored inside the IC card 12 and rewriting of the information, and so on. The IC card 12 holds a command received from the terminal device 11 via a UART in a reception buffer, for example, and then interprets the command held in the reception buffer and executes the processing according to the command.

The IC card 12 may be provided with a power source. Or the IC card does not have a power source, but the terminal device 11 may supply power to the IC card 12 with a contact system or a contactless system.

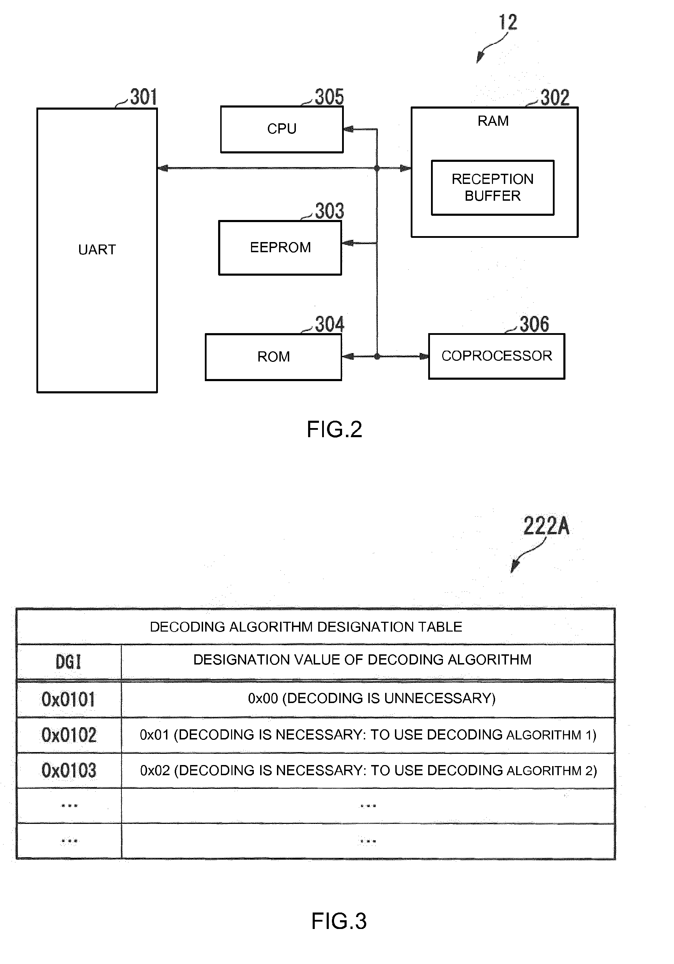

Fig. 2 shows an example of a configuration of a hardware of the IC card 12 of the first embodiment.

The IC card 12 is provided with a UART 301, a RAM 302, an EEPROM 303, a ROM 304, a CPU 305, and a coprocessor 306. A reception buffer 321 to hold the information of a command received from the terminal device 11 is provided in the RAM 302. A transmission buffer to hold information of a response to be transmitted to the terminal device 11, and a working buffer to hold information at the time of performing various operations may be provided in the RAM 302.

Here, in the example of Fig. 2, the IC card 12 is provided with the coprocessor 306 to execute a specific processing (in the present embodiment, a processing to encrypt data and a processing to decode encrypted data) so as to support the CPU 305. As another example, the IC card 12 is not provided with the coprocessor 306, but the CPU 305 may execute the whole processing.

In addition, in the example of Fig. 1 and Fig. 2, the communication section 201 is realized by the function of the UART 301, the storage section 202 is realized by the functions of the RAM 302, the EEPROM 303 and the ROM 304, and the controller 203 is realized by the functions of the CPU 305 and the coprocessor 306.

Here, standard corresponding information relating to DGI of the standard corresponding information storage areas 121, 221, and variable corresponding information relating to DGI of the variable corresponding information storage areas 122, 222 will be described.

As the standard corresponding information relating to DGI of the standard corresponding information storage areas 121, 221, DGI in a command of store data (a store data command), and information of designation relating to encryption and decoding for write data set for each DGI are used, in accordance with the specification (standard specification) of the industry standard of a financial IC card. That is, the standard corresponding information is information indicating DGI to identify write data, and information of designation relating to encryption and decoding corresponding to DGI. As the information of designation, information indicating presence or absence of encryption and decoding for write data, and information indicating a processing method relating to encryption and decoding for write data when the write data is encrypted and decoded, are used, for example. Here, the encryption and decoding for write data is encryption of data seen from a sender side, and is decoding of data seen from a receiver side. In addition, the processing method relating to encryption and decoding for write data is a method of encryption seen from a sender side, and is a method of decoding seen from a receiver side.

Standard corresponding information relating to DGI of the standard corresponding information storage area 121 to be registered in the terminal device 11, and standard corresponding information relating to DGI of the standard corresponding information storage area 221 to be registered in the IC card 12 are previously set, in accordance with the above-described specification. The standard corresponding information relating to DGI of the standard corresponding information storage area 121 in the terminal device 11, and the standard corresponding information relating to DGI of the standard corresponding information storage area 221 in the IC card 12 are the same information (though they are not strictly the same, they may be information having substantially the same contents) to each other.

As the variable corresponding information relating to DGI of the variable corresponding information storage areas 122, 222, DGI and information of designation relating to encryption and decoding for write data set for each DGI, which are variable information, are used. That is, the variable corresponding information is information indicating DGI to identify write data, and information of designation relating to encryption and decoding corresponding to DGI. As the information of designation, information indicating presence or absence of encryption and decoding for write data, and information indicating a processing method relating to encryption and decoding for write data when the write data is encrypted and decoded, are used, for example. Here, the encryption and decoding for write data is encryption of data seen from a sender side, and is decoding of data seen from a receiver side. In addition, the processing method relating to encryption and decoding for write data is a method of encryption seen from a sender side, and is a method of decoding seen from a receiver side.

According to the present embodiment, in the terminal device 11, when the variable corresponding information storage controller 143 changed the variable corresponding information relating to DGI of the variable corresponding information storage area 122 (including a new addition), in accordance with an operation by a user, or the like, the communication controller 141 and the communication section 101 transmit the information indicating the changed content to the IC card 12. In addition, the IC card 12, when the communication section 201 and the communication controller 241 receives the information indicating the changed content, the variable corresponding information storage controller 243by changes the variable corresponding information relating DGI of the variable corresponding information storage area 222 so as to match the variable corresponding information relating to DGI of the variable corresponding information storage area 222 to the received information. By this means, the variable corresponding information relating to DGI of the variable corresponding information storage area 122 registered in the terminal device 11, and the variable corresponding information relating to DGI of the variable corresponding information storage area 222 registered in the IC card 12 are kept to be the same information (though they are not strictly the same, they may be information having substantially the same contents) to each other.

Here, since the encryption and the decoding correspond to each other, the standard corresponding information relating to DGI and the variable corresponding information relating to DGI may be information in the viewpoint of encryption, or may be information in the viewpoint of decoding.

As a specific example, the terminal device 11 that is a sender side of data is an encryption side, and the IC card 12 that is a receiver side of data is a decoding side. In this case, the terminal device 11 may hold the standard corresponding information relating to DGI and the variable corresponding information relating to DGI which are described by the information in the viewpoint of encryption, and the IC card 12 may hold the standard corresponding information relating to DGI and the variable corresponding information relating to DGI which are described by the information in the viewpoint of decoding.

In the present embodiment, it is assumed that regarding the encryption and the decoding which correspond to each other, the information in the viewpoint of encryption and the information in the viewpoint of decoding are the similar information. Specifically, it is assumed that information indicating that encryption is to be performed, and information indicating that decoding is to be performed corresponding to each other, and are the same information. In addition, it is assumed that information indicating that encryption is not performed, and information indicating that decoding is not performed corresponding to each other, and are the same information. In addition, it is assumed that information indicating that encryption is to be performed with a prescribed encryption method A, and information indicating that decoding is to be performed with a prescribed decoding method B so as to decode the data which has been encrypted with the relevant encryption method A correspond to each other, and are the same information.

In addition, when an algorithm of encryption and decoding serving as a standard is mutually set to the terminal device 11 and the IC card 12, regarding one to use the relevant algorithm serving as a standard, the information to specify an algorithm may not be included in the standard corresponding information relating to DGI and the variable corresponding information relating to DGI. In this case, regarding DGI in which the information of an algorithm of encryption and decoding is not specified, in the standard corresponding information relating to DGI and the variable corresponding information relating to DGI, the terminal device 11 and the IC card 12 use the algorithm serving as a standard.

As an example, regarding the standard corresponding information relating to DGI, an algorithm of encryption and decoding is fixedly set to a prescribed algorithm, and the standard corresponding information relating to DGI specifies DGI and presence or absence of encryption (similarly presence or absence of decoding).

Fig. 3 shows an example of variable corresponding information 222A relating to DGI to be stored in the variable corresponding information storage area 222 of the IC card 12 of the first embodiment.

Fig. 3 shows information of a decoding algorithm designation table corresponding to the variable corresponding information 222A relating to DGI.

The decoding algorithm designation table of Fig. 3 holds DGI and a designation value of the decoding algorithm in association with each other.

As a specific example, DGI of "0x0101" and "0x00" indicating that decoding is unnecessary are associated with each other. DGI of "0x0102" and "0x01" indicating that decoding is necessary and to use a method of a prescribed decoding algorithm (decoding algorithm 1) are associated with each other. DGI of "0x0103" and "0x02" indicating that decoding is necessary and to use a method of a prescribed decoding algorithm (decoding algorithm 2) are associated with each other. Here, the decoding algorithm 1 and the decoding algorithm 2 are different decoding algorithms. In addition "0x" indicates that the number is a hexadecimal number.

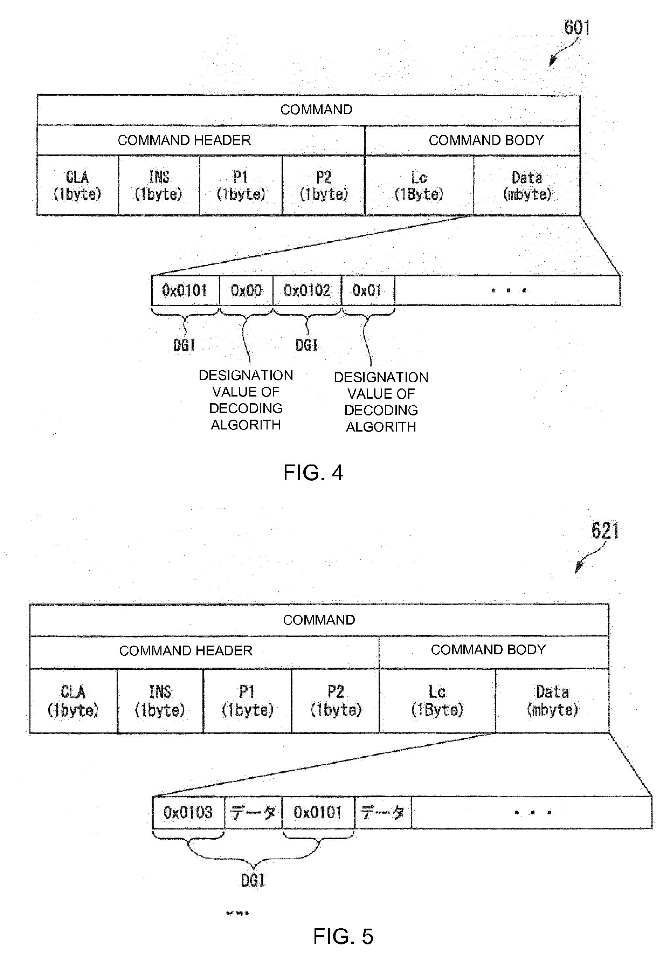

Fig. 4 shows an example of a configuration of a command 601 to be transmitted from the terminal device 11 to the IC card 12 of the first embodiment. The command 601 of Fig. 4 is used for informing a combination of DGI and a decoding algorithm designation value from the terminal device 11 to the IC card 12. That is, the command 601 is a command of corresponding information notification (a corresponding information notification command).

The command 601 has a command header and a command body.

The command header includes a class byte (CLA: class byte) indicating a class of the command, an instruction byte (INS: Instruction byte), and P1, P2 that are parameter bytes (P: parameter byte) each indicating a parameter. Each of CLA, INS, P1, P2 is information of 1 byte.

The command body includes Lc indicating a length of data (Data), and Data that is data itself. Lc is information of 1 byte, and Data is information of m bytes (m is an integer not less than 1).

In the command 601 of Fig. 4, the terminal device 11 stores one or more combinations of DGI and a decoding algorithm designation value corresponding to the relevant DGI, in the portion of Data. DGI is information of 2 bytes, and the decoding algorithm designation value is information of 1 byte.

The terminal device 11 transmits the command 601 as shown in Fig. 4 to the IC card 12, before transmitting a command of store data to the IC card 12, for example. The terminal device 11 stores the information of the combination of DGI and the decoding algorithm designation value which has been transmitted to the IC card 12, in the variable corresponding information storage area 122 (decoding algorithm designation table relating to DGI) of the relevant terminal device 11.

The IC card 12 stores the information of the combination of DGI and the decoding algorithm designation value which has been stored in the portion of Data of the commend 601 received from the terminal device 11, in the variable corresponding information storage area 222 (decoding algorithm designation table relating to DGI). In addition, when the IC card 12 receives the information relating to DGI which has previously been stored in the variable corresponding information storage area 222 (decoding algorithm designation table relating to DGI), the IC card 12 overwrites the received information to the previously stored information, for example.

Fig. 5 shows an example of a configuration of a command 621 to be transmitted from the terminal device 11 to the IC card 12 of the first embodiment. The command 621 of Fig. 5 is used for transmitting data from the terminal device 11 to the IC card 12.

The command 621 has a command header and a command body.

The command header has CLA, INS, P1, P2, in the same way as the case of the command 601 shown in Fig. 4.

The command body has Lc, Data, in the same way as the case of the command 601 shown in Fig. 4.

In the example of Fig. 5, the terminal device 11 stores one or more combinations of DGI and data (data itself) corresponding to the relevant DGI, in the portion of Data. DGI is information of 2 bytes, and data is information of optional bytes.

When transmitting a command of store data to the IC card 12, for example, the terminal device 11 transmits the command 621 as shown in Fig. 5 to the IC card 12. The terminal device 11 puts one or more combination of data and DGI in the command 621. In this case, regarding DGI included in the variable corresponding information relating to DGI of the variable corresponding information storage area 122, the terminal device 11 uses the combination (the decoding algorithm designation table shown in Fig. 3) of DGI and the information of designation relating to encryption and decoding, which is specified in the variable corresponding information relating to the relevant DGI. In addition, regarding DGI not included in the variable corresponding information relating to DGI of the variable corresponding information storage area 122, the terminal device 11 uses the combination of DGI and the information of designation relating to encryption and decoding, which is specified in the standard corresponding information relating to DGI of the standard corresponding information storage area 121.

That is, regarding the combination of DGI and the information of designation relating to encryption and decoding, to begin with, the variable corresponding information relating to DGI of the variable corresponding information storage area 122 (similarly, the variable corresponding information 222A relating to DGI of the variable corresponding information storage area 222) is preferentially used. And when DGI is not included in the information, the standard corresponding information relating to DGI of the standard corresponding information storage area 121 (similarly, the standard corresponding information relating to DGI of the standard corresponding information storage area 221) is used.

When the variable corresponding information relating to DGI of the variable corresponding information storage area 122 is used, the terminal device 11 encrypts data of an object to be stored in the IC card 12 or does not encrypt the data of the object, in accordance with the information of designation relating to encryption and decoding corresponding to DGI. The terminal device 11 transmits DGI and the encrypted data (when encryption is unnecessary, the data without change) in association with each other.

The IC card 12 acquires a combination of DGI and data (not encrypted data, or encrypted data) which is stored in the portion of Data of the command 621 received from the terminal device 11.

And when DGI is included in the variable corresponding information 222A relating to DGI of the variable corresponding information storage area 222, the IC card 12 uses the combination (the decoding algorithm designation table shown in Fig. 3) of DGI and the information of designation relating to encryption and decoding, which is specified in the variable corresponding information 222A relating to the relevant DGI. That is, the IC card 12 decodes data corresponding to the relevant DGI, or does not decode the relevant data, in accordance with the relevant combination, and stores such data in an area of the storage section 202.

On the other hand, when DGI is not included in the variable corresponding information 222A relating to DGI of the variable corresponding information storage area 222, the IC card 12 uses the combination of DGI and the information of designation relating to encryption and decoding, which is specified in the standard corresponding information relating to DGI of the standard corresponding information storage area 221. That is, the IC card 12 decodes data corresponding to the relevant DGI, or does not decode the relevant data, in accordance with the relevant combination, and stores such data in an area of the storage section 202. As an example, a command to be transmitted from the terminal device 11 to the IC card 12 is of a format of Command Application Data Unit (C-APDU) which is specified in ISO/IEC 7816-3.

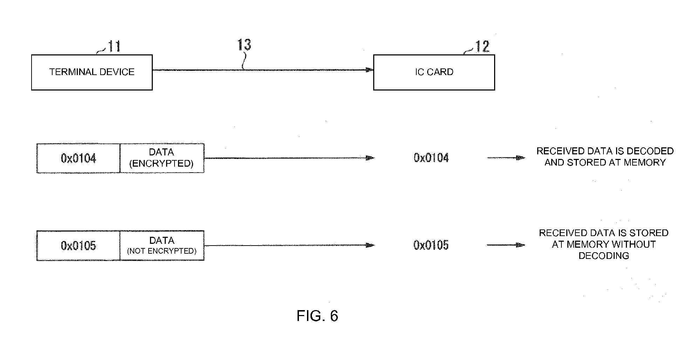

Fig. 6 shows an example of an aspect of data communication which is performed by the terminal device 11 and the IC card 12 of the first embodiment.

As an example, in the terminal device 11, DGI of "0x0104" and "encryption performed" (or, similarly "decoding performed") are stored in the variable corresponding information storage area 122 or the standard corresponding information storage area 121, in association with each other. In this case, the terminal device 11 transmits the combination of DGI of "0x0104" and encrypted data to the IC card 12. First of all, the IC card 12 preferentially searches the variable corresponding information storage area 222 for DGI in the combination of DGI of "0x0104" and the encrypted data which has been received from the terminal device 11. If DGI is not present there, the IC card 12 searches the standard corresponding information storage area 221 for DGI. Here, in the IC card 12, DGI of "0x0104" and "decoding performed" (or, similarly "encryption performed") are stored in the variable corresponding information storage area 222 or the standard corresponding information storage area 221, in association with each other. The IC card 12 decodes the received data, and stores the decoded data in an area of a memory (storage section 202). In addition, information to specify an encryption and decoding algorithm may be added to the information of "decoding performed" (or, similarly "encryption performed").

As another example, in the terminal device 11, DGI of "0x0105" and "encryption not performed" (or, similarly "decoding not performed") are stored in the variable corresponding information storage area 122 or the standard corresponding information storage area 121, in association with each other. In this case, the terminal device 11 transmits the combination of DGI of "0x0105" and data (not encrypted data) to the IC card 12. First of all, the IC card 12 preferentially searches the variable corresponding information storage area 222 for DGI in the combination of DGI called "0x0105" and the data. If DGI is not present there, the IC card 12 searches the standard corresponding information storage area 221 for DGI. Here, in the IC card 12, DGI of "0x0105" and "decoding not performed" (or, similarly "encryption not performed") are stored in the variable corresponding information storage area 222 or the standard corresponding information storage area 221, in association with each other. The IC card 12 stores the received data without change (without decoding) in an area of a memory (storage section 202).

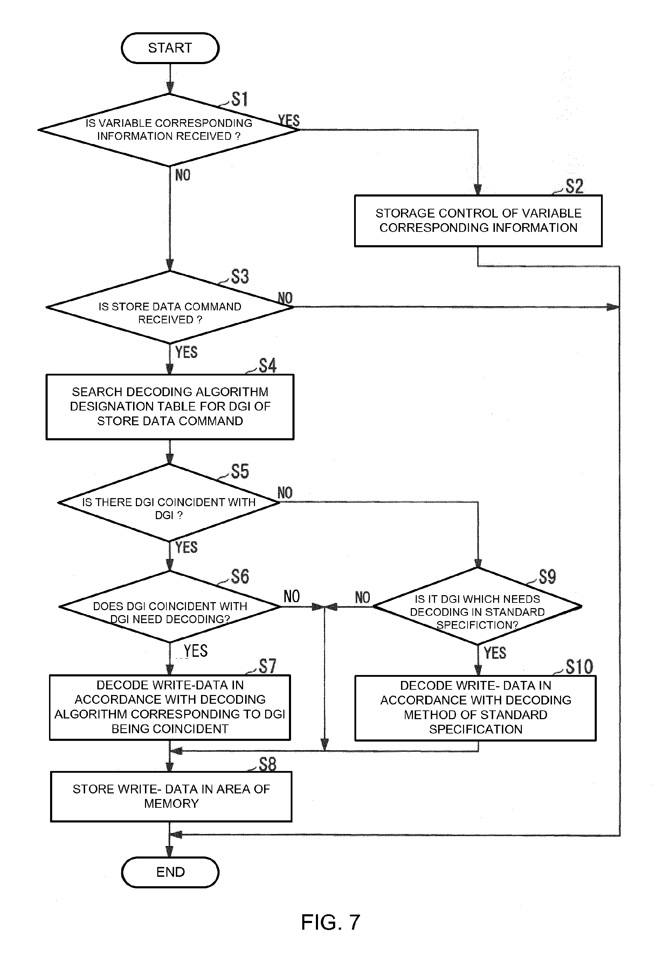

Fig. 7 is a flow chart showing an example of a procedure of a processing to be performed in the IC card 12 of the first embodiment.

In the terminal device 11, the communication section 101 controlled by the communication controller 141, transmits a command as shown in Fig. 4, so as to notify variable corresponding information (information indicating a combination of DGI and information of designation relating to encryption and decoding) relating to DGI to the IC card 12, and a command as shown in Fig. 5, so as to send write data to the IC card 12, to the IC card 12. In this case, the encryption controller 142 encrypts data, if necessary.

In the IC card 12, the communication section 201 controlled by the communication controller 241, receives the command transmitted from the terminal device 11. The variable corresponding information storage controller 243 determines whether or not the IC card 12 has received variable corresponding information relating to DGI, based on the received command (step S1).

As a result of this determination (step S1), when it is determined that the IC card 12 has received the variable corresponding information relating to DGI(step S1 is YES), the variable corresponding information storage controller 243 stores (for example, add, or overwrite to the relevant portion or the whole) the received variable corresponding information relating to DGI in the variable corresponding information storage area 222 of the storage section 202 (step S2). And the IC card 12 finishes the processing of the present flow.

On the other hand, as a result of the above-described determination (step S1), when it is determined that the IC card 12 has not received the variable corresponding information relating to DGI (step S1 is NO), the IC card 12 does not performs the processing of the step S2.

Next, the data storage controller 244 determines whether or not the IC card 12 has received a command of store data, based on the received command (step S3).

As a result of this determination (step S3), when it is determined that the IC card 12 has not received a command of store data (step S3 is NO), the IC card 12 finishes the processing of the present flow.

In addition, when a command other than the command of the variable corresponding information relating to DGI or the command of store data is transmitted from the terminal device 11 to the IC card 12, the IC card 12 receives the relevant command and performs a processing according to the content of the relevant command.

As a result of the above-described determination (step S3), when it is determined that the IC card 12 has received the command of store data(step S3 is YES), the IC card 12 performs subsequent processings (processings of step S4 - step S10).

Here, when the received command of the store data includes a plurality of pairs of DGI and data, the IC card 12 performs the subsequent processings (processings of step S4 - step S10) for each pair.

To begin with, in the IC card 12, the data storage controller 244 extracts DGI (here, for each DGI) included in the received command of store data. And the data storage controller 244 searches the variable corresponding information storage area 222 (decoding algorithm designation table relating to DGI) for the extracted DGI (step S4). By this means, the data storage controller 244 determines whether or not DGI coincident with the extracted DGI is included in the variable corresponding information storage area 222 (step S5).

As a result of this determination (step S5), when it is determines that DGI coincident with the extracted DGI is included in the variable corresponding information storage area 222 (step S5 is YES), the data storage controller 244 determines whether or not the relevant DGI and that decoding is necessary are associated with each other, in the variable corresponding information storage area 222 (step S6).

As a result of this determination (step S6), when it is determines that that the decoding is unnecessary is not associated with DGI, and that decoding is necessary is associated with DGI (step S6 is YES), the IC card 12 determines a decoding algorithm corresponding to the relevant DGI, based on the variable corresponding information 222A relating to DGI of the variable corresponding information storage area 222. And in the IC card 12, the decoding controller 242 decodes the data (write data) corresponding to the relevant DGI in the command of store data, in accordance with the determined decoding algorithm (step S7). The data storage controller 244 writes and stores the decoded data in an area of the memory (for example, the EEPROM or the RAM) (step S8).

On the other hand, as a result of the above-described determination (step S6), when the data storage controller 244 determines that that decoding is unnecessary is associated with DGI (step S6 is NO), the data storage controller 244 writes and stores the data (write data) corresponding to DGI in the command of store data, in an area of the memory (for example, the EEPROM or the RAM), without decoding the data (step S8).

In addition, as a result of the above-described determination (step S5), when the data storage controller 244 determines that DGI coincident with the extracted DGI is not included in the variable corresponding information storage area 222 (step S5 is NO), the data storage controller 244 refers to the information of the standard specification (in the present embodiment, the standard corresponding information relating to DGI of the standard corresponding information storage area 221). And the data storage controller 244 determines whether or not the extracted DGI indicates that decoding is necessary, based on the information of the standard specification, by the data storage controller 244 (step S9)

As a result of this determination (step S9), when the data storage controller 244 determines that the extracted DGI indicates that decoding is necessary (step S9 is YES), the data storage controller 244 determines a decoding algorithm, based on the information of the standard specification. And the decoding controller 242 decodes the data (write data) corresponding to the relevant DGI in the command of store data, in accordance with the determined decoding algorithm (decoding method of the standard specification) (step S10). And the data storage controller 244 writes and stores the decoded data in an area of the memory (for example, the EEPROM or the RAM) (step S8).

On the other hand, as a result of the above-described determination (step S9), when the data storage controller 244 determines that the extracted DGI indicates that decoding is not necessary (unnecessary) (step S9 is NO), the data storage controller 244 writes and stores the data (write data) corresponding to the relevant DGI in the command of store data, in an area of the memory (for example, the EEPROM or the RAM), without decoding the data (step S8).

Here, the IC card 12 once stores the information (for example, DGI and data) of the received command in the reception buffer (for example, the reception buffer 321 shown in Fig. 2), and reads and uses the information from the reception buffer when the information is necessary (for example, DGI in step S4 - step S6, step S9, and data in step S7 - step S8, step S10).

In the above-described embodiment, the IC card has been described, as an example of a portable electronic device. Without being limited to this, as a portable electronic device, various electronic devices which can be carried, such as an IC tag, a passport incorporated with an IC, a driver's license incorporated with an IC, can be used.

In addition, a program (a program of a computer) so as to realize a function of a portable electronic device (in this embodiment, the IC card 12) may be provided.

In the communication system of the above-described embodiment, the terminal device 11 and the IC card 12 are different bodies. But a device having both of the function of the terminal device 11 and the function of the IC card 12, such as a smartphone, may be used, as the communication system. In a device (an integrated device) having both of the function of the terminal device 11 and the function of the IC card 12, the communication sections 101, 201 may not be provided, the storage sections 102, 202 may be used in common, and the controllers 103, 203 may be used in common, for example. In addition, the terminal device 11 is a smartphone, and the IC card 12 that is a portable electronic device may be fitted on the terminal device 11, and the IC card 12 may be incorporated in the terminal device 11, for example.

According to the above-described embodiment, the IC card 12 is provided with a storage section includes a first area (in the embodiment, the standard corresponding information storage area 221) and a second area (in the embodiment, the variable corresponding information storage area 222). The IC card 12 is further provided with a storage controller (in the embodiment, the variable corresponding information storage controller 243) and a decoding controller 242. In the first area, first corresponding information (in the embodiment, the standard corresponding information relating to DGI) indicating first identification information (in the embodiment, DGI) to identify data, and first decoding information (in the embodiment, information of designation relating to encryption and decoding for write data) relating to decoding corresponding to the first identification information is stored. In the second area, second corresponding information (in the embodiment, the variable corresponding information 222A relating to DGI) indicating second identification information (in the embodiment, DGI) to identify data, and second decoding information (in the embodiment, information of designation relating to encryption and decoding for write data) relating to decoding corresponding to the second identification information is stored. The storage controller stores the second corresponding information in the second area. The decoding controller 242 which controls, when identification information to identify data which is included in a command received from an outside (in the embodiment, the terminal device 11) is included in the second corresponding information stored in the second area, decoding of the relevant data included in the relevant command, based on the second decoding information corresponding to the second identification information.

By this means, the IC card 12 performs designation relating to decoding of data, and thereby can improve convenience. As a specific example, the IC card 12 stores the corresponding information indicating DGI and the decoding information corresponding to this DGI, in the variable corresponding information relating to DGI which is given priority to the standard corresponding information relating to DGI, and can control decoding of the received data, in accordance with the variable corresponding information relating to the relevant DGI.

For example, a user can properly select whether or not to encrypt (whether or not to decode) data to be transmitted from the terminal device 11 to the IC card 12, and an algorithm in the case of performing encryption (an algorithm in the case of performing decoding), in consideration of processing speed and security strength. As a specific example, when the communication channel 13 between the terminal device 11 and the IC card 12 is likely to be intercepted, or when the security strength is to be enhanced in another case, it is possible to use setting to encrypt (decode) whole data or a lot of data to be transmitted from the terminal device 11 to the IC card 12. On the other hand, when the communication channel 13 between the terminal device 11 and the IC card 12 is not likely to be intercepted, and is safe, or when it is desired to speedily finish the processing, or when the processing speed is to be enhanced in another case, it is possible to use setting not to encrypt (not to decode) whole data or a lot of data to be transmitted from the terminal device 11 to the IC card 12.

For example, a user can properly select whether or not to encrypt (whether or not to decode) write data to be presented from the terminal device 11 to the IC card 12 by a store data command (a command of store data), and an algorithm in the case of performing encryption (an algorithm in the case of performing decoding), in the light of processing speed and security strength which the user requests.

As an example, a user is an issuer of the IC card 12, and writes data is data such as a full name and a limit amount to be written in the each IC card 12. The user operates the terminal device 11, to notify variable corresponding information relating to DGI from the terminal device 11 to the each IC card 12, and stores the variable corresponding information relating to DGI in the variable corresponding information storage area 222 of the each IC card 12.

According to the above-described embodiment, in the IC card 12, when identification information (in the embodiment, DGI) to identify data which is included in a command received from an outside is not included in the second corresponding information (in the embodiment, the variable corresponding information 222A relating to DGI) stored in the second area (in the embodiment, the variable corresponding information storage area 222), and the identification information (in the embodiment, DGI) to identify data which is included in the relevant command is included in the first corresponding information (in the embodiment, the standard corresponding information relating to DGI) stored in the first area (in the embodiment, the standard corresponding information storage area 221), the decoding controller 242, the IC card 12 controls decoding of the data included in the relevant command, based on the first decoding information (in the embodiment, the information of designation relating to encryption and decoding for the write data) corresponding to the relevant first identification information.

By this means, in the IC card 12, regarding data corresponding to the identification information which is not specified in the variable corresponding information 222A relating to DGI, it is possible to control decoding of the data, in accordance with the standard corresponding information relating to DGI.

According to the above-described embodiment, in the IC card 12, one or both of the first decoding information and the second decoding information include information to determine the presence or absence of decoding.

By this means, in the IC card 12, it is possible to optionally designate the necessity of encryption of data (necessity of decoding).

According to the above-described embodiment, in the IC card 12, one or both of the first decoding information and the second decoding information include information to determine an algorithm for decoding.

By this means, in the IC card 12, it is possible to optionally designate an algorithm for encryption of data (an algorithm for decoding).

According to the above-described embodiment, the terminal device 11 is provided with the communication section 101 which transmits a command including the second corresponding information as information different from the first corresponding information stored in the IC card 12, to the IC card 12. The first corresponding information is the first corresponding information indicating the first identification information to identify data and the first decoding information relating to decoding corresponding to the first identification information, and in the embodiment, is the standard corresponding information relating DGI). The second corresponding information is corresponding information indicating the second identification information to identify data and the second decoding information relating to decoding corresponding to the second identification information, and in the embodiment, is the variable corresponding information relating to DGI.

By this means, the terminal device 11 notifies the variable corresponding information relating to DGI which is different from the standard corresponding information relating to DGI, to the IC card 12, and thereby the terminal device 11 can make the IC card 12 perform control of decoding of data, with a decoding method (decoding method specified in the variable corresponding information relating to DGI) which is different from a decoding method specified in the standard corresponding information relating to DGI.

According to the above-described embodiment, in the terminal device 11, the communication section 101 transmits a command including the second identification information and data which is encrypted based on the second decoding information corresponding to the relevant second identification information, to the IC card 12.

By this means, the terminal device 11 transmits the command including the identification information and the encrypted data to the IC card 12, in accordance with the variable corresponding information relating to DGI which has been notified to the IC card 12, and thereby the terminal device 11 can make the IC card 12 properly perform control of decoding of the relevant data, in accordance with the variable corresponding information relating to the relevant DGI.

### (Second Embodiment)

A communication system of a second embodiment is provided with the same configuration and function as the communication system 1 of the first embodiment shown in Fig. 1 - Fig. 7, and is further provided with functions according to the second embodiment described below.

For the reason, in the description of the present embodiment, regarding the generally same configuration as the communication system 1 of the first embodiment, the same reference symbols as the first embodiment are used, for convenience of the description.

In the following description, regarding the communication system 1 of the present embodiment, points different from the first embodiment will be described.

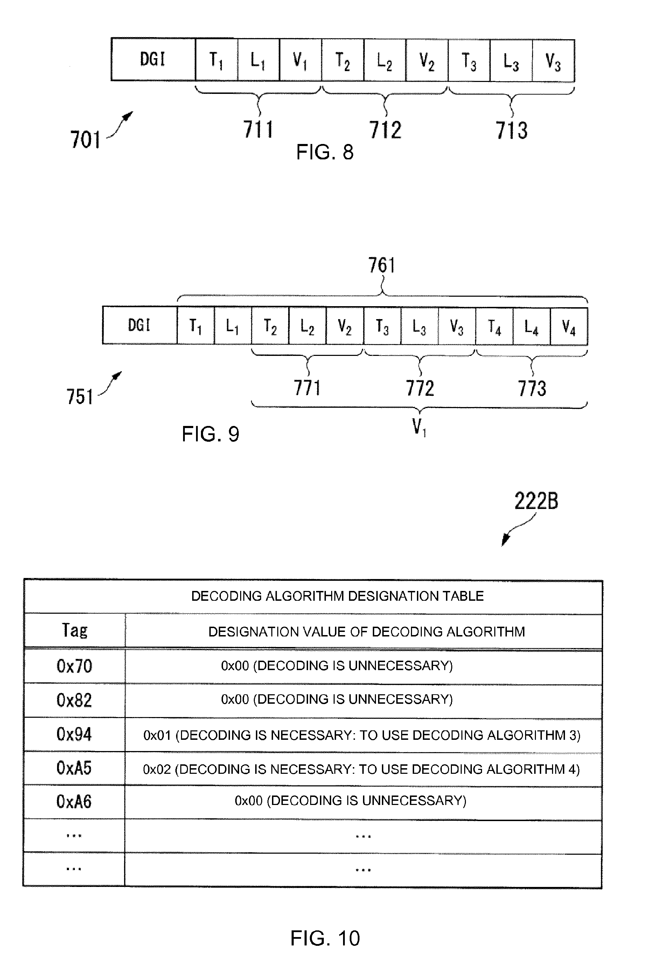

Fig. 8 shows an example of a configuration of a data part of a command including a TLV part in the second embodiment.

In Fig. 8, a data part 701 is composed of DGI, and a plurality of TLV parts 711 - 713 subsequent to DGI. The data part 701 of Fig. 8 has the three TLV parts 711 - 713.

Each of the TLV parts 711, 712, 713 includes Tag, Length and Value. That is, the TLV part 711 includes Tag T1, Length L1 and Value V1, the TLV part 712 includes Tag T2, Length L2 and Value V2, and the TLV part 713 includes Tag T3, Length L3 and Value V3.

Fig. 9 shows another example of a configuration of a data part of a command including a TLV part in the second embodiment.

In Fig. 9, a data part 751 is composed of DGI, and one TLV part 761 subsequent to DGI. The TLV part 761 includes Tag T1, Length L1 and Value V1. Further, Value V1 includes other TLV parts (for example, three TLV parts 771 - 773).

The TLV part 771 includes Tag T2, Length L2 and Value V2, the TLV part 772 includes Tag T3, Length L3 and Value V3, and the TLV part 773 includes Tag T4, Length L4 and Value V4.

In addition, as a configuration of a data part of a command including a TLV part, various configurations may be used. For example, as a configuration of a data part of a command including a TLV part, one of the configuration shown in Fig. 8 that a plurality of the TLV parts are arranged in parallel, and the configuration shown in Fig. 9 that the other TLV parts are arranged in one TLV part may be used, or a configuration in which the both are optionally combined may be used. As the number of the TLV parts to be included in the data part of the command, various numbers may be used.

Here, variable corresponding information relating to Tag of the variable corresponding information storage areas 122, 222 will be described.

As the variable corresponding information of the variable corresponding information storage areas 122, 222, changeable information composed of Tag and information of designation relating to encryption and decoding for write data (data of Value corresponding to Tag) set for each Tag, is used.

As the information of designation, for example, information indicating the presence or absence of encryption and decoding for the write data, and information indicating a processing method relating to encryption and decoding for the write data when the write data is encrypted and decoded, are used. The encryption and decoding for the write data is encryption seen from a sender side, and is decoding seen from a receiver side. A processing method relating to the encryption and decoding for the write data is a method of encryption seen from a sender side, and is a method of decoding seen from a receiver side.

In the terminal device 11 according to the present embodiment, when the variable corresponding information storage controller 143 changed the variable corresponding information relating to Tag of the variable corresponding information storage area 122 (including a new addition), in accordance with an operation by a user, or the like, the terminal 11 transmit information indicating the changed content to the IC card 12, by the communication section 101 controlled by the communication controller 141. In addition, in the IC card 12, when the communication section 201 controlled by the communication controller 241 receive the information indicating the changed content, the variable corresponding information storage controller 243 changes the variable corresponding information relating Tag of the variable corresponding information storage area 222 so as to match the variable corresponding information relating to Tag of the variable corresponding information storage area 222 to the received information. By this means, the variable corresponding information relating to Tag of the variable corresponding information storage area 122 registered in the terminal device 11, and the variable corresponding information relating to Tag of the variable corresponding information storage area 222 registered in the IC card 12 are kept to be the same information (though they are not strictly the same, they may be information with substantially the same contents) to each other.

Here, since the encryption and the decoding correspond to each other, the variable corresponding information relating to Tag may be information in the viewpoint of encryption, and may be information in the viewpoint of decoding. As a specific example, the terminal device 11 that is a sender side of data is an encryption side, and the IC card 12 that is a receiver side of data is a decoding side. In this case, the terminal device 11 may hold the variable corresponding information relating to Tag which is described by the information in the viewpoint of encryption, and the IC card 12 may hold the variable corresponding information relating to Tag which is described by the information in the viewpoint of decoding.

In the present embodiment, it is assumed that regarding the encryption and the decoding which correspond to each other, the information in the viewpoint of encryption and the information in the viewpoint of decoding are the similar information. Specifically, it is assumed that information indicating that encryption is to be performed, and information indicating that decoding is to be performed corresponding to each other, and are the same information. In addition, it is assumed that information indicating that encryption is not performed, and information indicating that decoding is not performed corresponding to each other, and are the same information. In addition, it is assumed that information indicating that encryption is to be performed with a prescribed encryption method A, and information indicating that decoding is to be performed with a prescribed decoding method B so as to decode the data encrypted with the relevant encryption method A correspond to each other, and are the same information.

In addition, when an algorithm of encryption and decoding serving as a standard is mutually set to the terminal device 11 and the IC card 12, regarding one to use the relevant algorithm serving as a standard, the information to specify an algorithm may not be included in the variable corresponding information relating to Tag. In this case, regarding Tag in which the information of an algorithm of encryption and decoding is not specified in the variable corresponding information relating to Tag, the terminal device 11 and the IC card 12 use the algorithm serving as a standard.

Fig. 10 is a diagram showing an example of variable corresponding information 222B relating to Tag to be stored in the variable corresponding information storage area 222 of the IC card 12 of the second embodiment.

Fig. 10 shows information of a decoding algorithm designation table corresponding to the variable corresponding information 222B relating to Tag.

The decoding algorithm designation table of Fig. 10 holds a tag and a designation value of the decoding algorithm, in association with each other.

As a specific example, Tag of "0x70" and "0x00" indicating that decoding is unnecessary are associated with each other. Tag of "0x82" and "0x00" indicating that decoding is unnecessary are associated with each other. Tag of "0x94" and "0x01" indicating that decoding is necessary and to use a method of a prescribed decoding algorithm (a decoding algorithm 3) are associated with each other. Tag of "0xA5" and "0x02" indicating that decoding is necessary and to use a method of a prescribed decoding algorithm (a decoding algorithm 4) are associated with each other. Tag of "0xA6" and "0x00" indicating that decoding is unnecessary are associated with each other. Here, the decoding algorithm 3 and the decoding algorithm 4 are different decoding algorithms. In addition "0x" indicates that the number is a hexadecimal number.

In addition, regarding the decoding algorithms 1, 2 of the first embodiment shown in Fig. 3, and the decoding algorithms 3, 4 of the second embodiment shown in Fig. 10, for example, the decoding algorithms 1 and 3 may be the same, and the decoding algorithms 2 and 4 may be the same, or one of the decoding algorithms 1, 2 and one of the decoding algorithms 3, 4 may only be the same, or the decoding algorithms 1, 2, 3, 4 may be different.

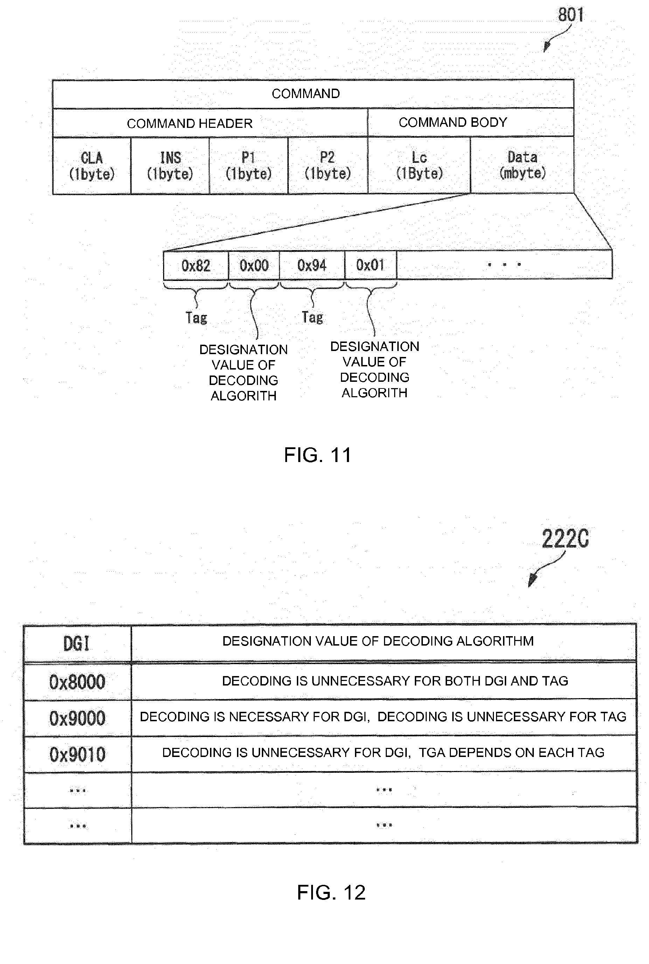

Fig. 11 shows an example of a configuration of a command 801 to be transmitted from the terminal device 11 to the IC card 12 in the second embodiment. The command 801 of Fig. 11 is used for the terminal device 11 to inform a combination of Tag and a decoding algorithm designation value from to the IC card 12.

The command 801 has a command header and a command body.

The command header and the command body have the same configurations as the command header and the command body of the first embodiment shown in Fig. 4, respectively.

In the command of Fig. 11, the terminal device 11 stores one or more combinations of a tag and a decoding algorithm designation value corresponding to the relevant Tag in the portion of Data. In the command of Fig. 11, Tag is information of 1 byte, and the decoding algorithm designation value is information of 1 byte.

The terminal device 11 transmits a command 801 as shown in Fig. 11 to the IC card 12, before transmitting a command of store data to the IC card 12, for example. The terminal device 11 stores the information of the combination of Tag and the decoding algorithm designation value which has been transmitted to the IC card 12, in the variable corresponding information storage area 122 (decoding algorithm designation table relating to Tag) of the terminal device 11.

The IC card 12 stores the information of the combination of Tag and the decoding algorithm designation value which is stored in the portion of Data of the commend 801 received from the terminal device 11, in the variable corresponding information storage area 222 (decoding algorithm designation table relating to Tag) of the IC card 12. In addition, when the IC card 12 receives the information relating to Tag which has been previously stored in the variable corresponding information storage area 222 (decoding algorithm designation table relating to Tag), the IC card 12 overwrites the received information to the previously stored information, for example.

In addition, the number of bytes (the number of bits) of the information of Tag may be optional, may be constant or may be variable, for example. As an example, a configuration that the number of bytes of the information of the relevant Tag is determined by the value (0 or 1) of the first bit of Tag, or the like, may be used.

Here, in the present embodiment, both of DGI and Tag (Tag of a TLV part) are included in a command of store data to be transmitted from the terminal device 11 to the IC card 12. For the reason, regarding the combination of DGI and Tag, a method of decoding (similarly, for encryption) is determined.

In the present embodiment, regarding the combination of DGI and Tag, a method of decoding (similarly, for encryption) is determined according to DGI. The information of the combination of DGI and Tag may be included in the standard corresponding information relating to DGI, or the variable corresponding information relating to DGI, of the first embodiment. In addition, as another configuration example, the standard corresponding information relating to DGI or the variable corresponding information relating to DGI which is used when the TLV part is not included in the command, and the standard corresponding information relating to DGI or the variable corresponding information relating to DGI which is used when the TLV part is included in the command are separately provided. And a configuration may be provided in each of the terminal device 11 and the IC card 12, wherein the standard corresponding information relating to DGI or the variable corresponding information relating to DGI which is used when the TLV part is not included in the command, and the standard corresponding information relating to DGI or the variable corresponding information relating to DGI which is used when the TLV part is included in the command, are switched and used, in accordance with whether or not the TLV part is included in the command.

Fig. 12 shows an example of variable corresponding information 222C relating to DGI and Tag, in the second embodiment. In addition, the standard corresponding information may be used in place of the variable corresponding information.

As a specific example, DGI of "0x8000" and that decoding of the write data corresponding to DGI and Value corresponding to Tag is unnecessary are associated with each other. DGI of "0x9000" and that decoding of the write data corresponding to DGI is necessary and decoding of Value corresponding to Tag is unnecessary are associated with each other. DGI of "0x9010" and that decoding of the write data corresponding to DGI is unnecessary, and regarding Value corresponding to Tag, whether or not decoding is necessary is determined by each Tag are associated with each other. In addition, the information to designate a decoding algorithm to be used when decoding is necessary may be included in the variable corresponding information 222C relating to DGI and Tag.

When the variable corresponding information 222C relating to DGI and Tag shown in Fig. 12 is used, when DGI included in the command received from the terminal device 11 is 0x8000, the IC card 12 does not perform decoding of the write data corresponding to DGI, and does not perform decoding of Value corresponding to Tag. In addition, when DGI included in the command received from the terminal device 11 is 0x9000, the IC card 12 performs decoding of the write data corresponding to DGI, and does not perform decoding of Value corresponding to Tag. In addition, when DGI included in the command received from the terminal device 11 is 0x9010, the IC card 12 does not perform decoding of the write data corresponding to DGI, and regarding Tag, performs decoding of Value corresponding to Tag, based on the variable corresponding information 222B relating to Tag, for each Tag, if necessary.

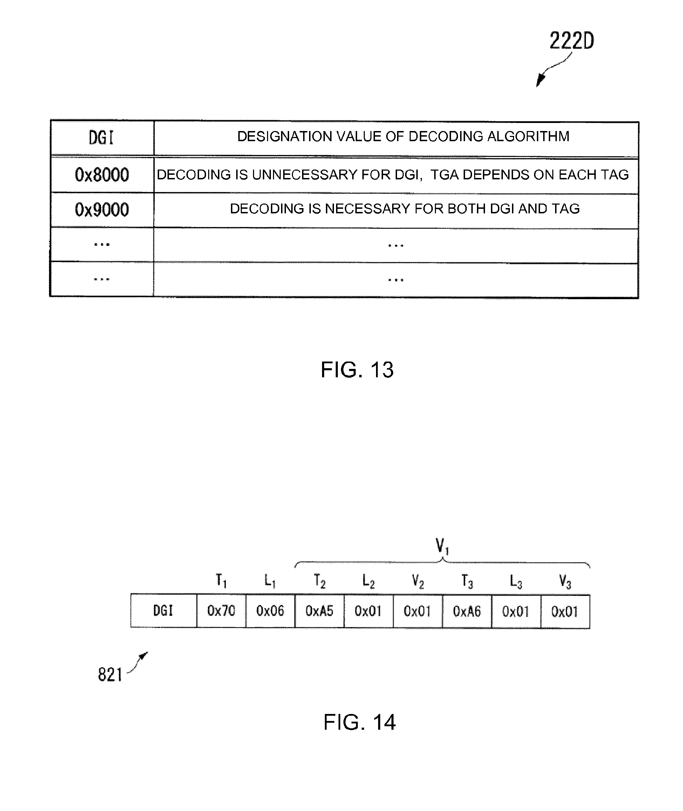

Fig. 13 shows another example of variable corresponding information 222D relating to DGI and Tag, in the second embodiment. In addition, the standard corresponding information may be used in place of the variable corresponding information.

As a specific example, DGI of "0x8000" and that regarding the write data corresponding to DGI, decoding is unnecessary, and regarding Value corresponding to Tag, whether or not decoding is necessary is determined by each Tag are associated with each other. DGI of "0x9000" and that regarding the write data corresponding to DGI, decoding is necessary, and regarding Value corresponding to Tag, that decoding is necessary is are associated with each other.

In addition, another example of the variable corresponding information relating to DGI and Tag in the second embodiment is shown. In addition, the standard corresponding information may be used in place of the variable corresponding information.

In the present example, DGI of "0x8000" and that regarding the write data corresponding to DGI, decoding is unnecessary, and regarding Value corresponding to Tag, whether or not decoding is necessary is determined by each Tag are associated with each other. DGI of "0x9000" and that regarding the write data corresponding to DGI, decoding is necessary, and decoding of Value corresponding to Tag is unnecessary are associated with each other.

In addition, another example of the variable corresponding information relating to DGI and Tag, in the second embodiment is shown. In addition, the standard corresponding information may be used in place of the variable corresponding information.

In the present example, DGI of "0x8000" and that decoding of the write data corresponding to DGI and Value corresponding to Tag is unnecessary are associated with each other. DGI of "0x9000" and that decoding of the write data corresponding to DGI is necessary, and regarding Value corresponding to Tag, whether or not decoding is necessary is determined by each Tag are associated with each other.

In addition, as a specific example, in the data parts 701, 702 of the commands shown in Fig. 8 and Fig. 9, the write data corresponding to DGI is the TLV part (one or more TLV parts) subsequent to the relevant DGI. In Fig. 8, the write data corresponding to DGI is the TLV parts 711, 712, 713. In Fig. 9, the write data corresponding to DGI is the TLV part 761. For the reason, in the case of performing decoding of the write data corresponding to DGI and decoding of Value of the TLV part, decoding is doubly performed to Value of the TLV part to be decoded, by the decoding based on DGI and the decoding based on Tag (that is, Value of the TLV part is doubly encrypted by the encryption based on DGI and the encryption based on Tag). Regarding the order of double encryption by encryption based on DGI and encryption based on Tag, in the present embodiment, an order to perform encryption based on DGI after encryption based on Tag has been performed (an order to perform decoding based on Tag after decoding based on DGI has been performed) is used, but another order may be used.

In addition, in the data part 751 of the command shown in Fig. 9, Value V1 corresponding to Tag T1 of the TLV part 761 is the other TLV parts 771 - 773. For the reason, in the case of performing decoding of Value of the TLV part (one of more TLV parts) included in the TLV part 761, decoding is doubly performed by the decoding based on Tag T1 of the TLV part 761, and the decoding based on Tag of the TLV part included in Value V1 of the TLV part 761 (that is, Value of the TLV part included in the TLV part 761 is doubly encrypted, by the encryption based on Tag T1 of the TLV part 761, and the encryption based on Tag of the TLV part included in Value V1 of the TLV part 761). Regarding the order of multiple-encryption based on two or more Tags, in the present embodiment, an order to perform, after encryption based on Tag of the TLV part not including the other TLV part has been performed, encryption based on Tag of the TLV part including the relevant TLV part (an order to perform, after decoding based on Tag of the TLV part including the other TLV part has been performed, decoding based on Tag of the relevant other TLV part) is used, but another order may be used.

Fig. 14 shows an example of a configuration of a data part 821 of a command to be transmitted from the terminal device 11 to the IC card 12 in the second embodiment.

The data part 821 includes DGI, and a first TLV part as a write data part corresponding to DGI. The first TLV part includes Tag T1, Length L1 and Value V1. Value V1 of the first TLV part is composed of a second TLV part (Tag T2, Length L2 and Value V2) and a third TLV part (Tag T3, Length L3 and Value V3) In this case, in the present embodiment, whether or not to encrypt the data part subsequent to the relevant DGI is determined by DGI, and whether or not to encrypt (decode) Value corresponding to each Tag in accordance with each Tag is determined by DGI. When encryption (decoding) in accordance with Tag is performed, the encryption (decoding) of Value corresponding to Tag is controlled, in accordance with Tag for the each TLV part.

As a specific example, a case in which the variable corresponding information 222B relating to Tag shown in Fig. 10 is used will be described. Since Tag T1 of the first TLV part is 0x70, it is determined that regarding Value V1 corresponding to Tag T1, encryption (decoding) is not performed. In addition, since Tag T2 of the second TLV part is 0xA5, it is determined that regarding Value V2 corresponding to Tag T2, encryption is performed, using the encryption algorithm 4 (decoding, using the decoding algorithm 4). In addition, since Tag T3 of the third TLV part is 0xA6, it is determined that regarding Value V3 corresponding to Tag T3, encryption (decoding) is not performed.

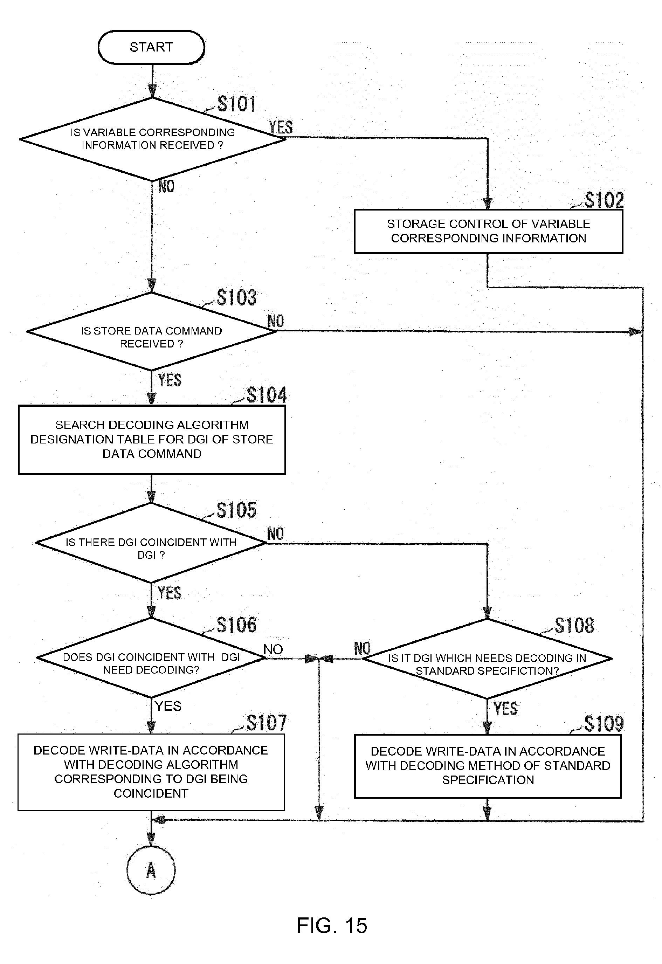

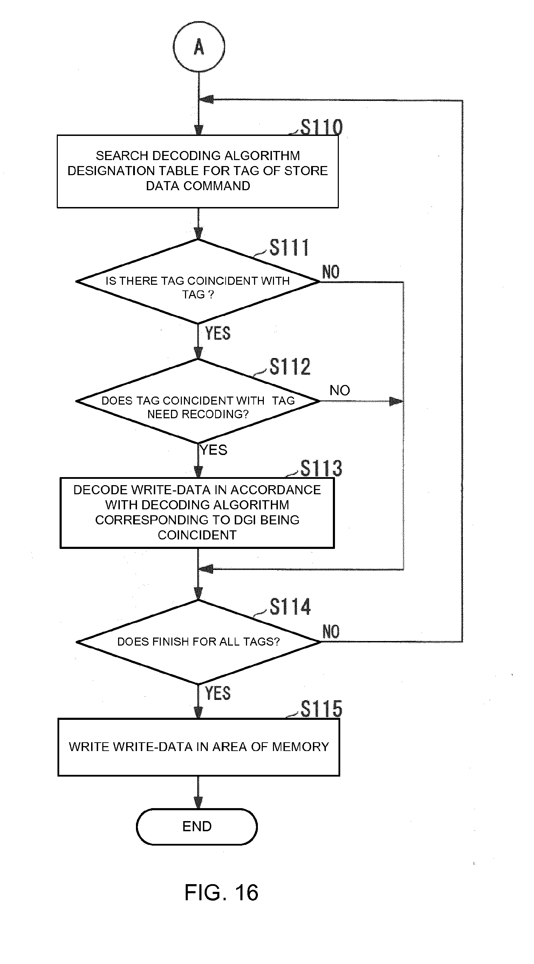

Fig. 15 and Fig. 16 are a flow chart showing an example of a procedure of a processing which is performed in the IC card 12 of the second embodiment.

In the terminal device 11, the communication section 101 controlled by the communication controller 141 transmits the following commands to the IC card 12.
- A command for notifying the variable corresponding information to the IC card 12, as shown in Fig. 4. In the present embodiment, the variable corresponding information is information indicating DGI and information of designation relating to encryption and decoding corresponding to DGI, as shown in Fig. 12 and Fig. 13.
- A command for notifying the variable corresponding information to the IC card 12, as shown in Fig. 11. In the present embodiment, the variable corresponding information is information indicating Tag and information of designation relating to encryption and decoding corresponding to Tag.
- A command including DGI and the TLV part, as shown in Fig. 14, for transmitting the write data to the IC card 12.

In this case, the terminal device 11 encrypts data by the encryption controller 142, if necessary.

In the IC card 12, the communication section 201 controlled by the communication controller 241, receives the command transmitted from the terminal device 11. The variable corresponding information storage controller 243 determines whether or not the IC card 12 has received the variable corresponding information relating to DGI and Tag or the variable corresponding information relating to Tag, based on the received command (step S101).

As a result of this determination (step S101), when the variable corresponding information storage controller 243 determines that the IC card 12 has received the variable corresponding information relating to DGI and Tag or the variable corresponding information relating to Tag (step S101 is YES), the variable corresponding information storage controller 243 store (for example, add, or overwrite to the relevant portion or the whole) the received variable corresponding information relating to DGI and Tag or the received variable corresponding information relating to Tag in the variable corresponding information storage area 222 of the storage section 202 (step S102). And, the IC card 12 finishes the processing of the present flow.

On the other hand, as a result of the above-described determination (step S101), when the variable corresponding information storage controller 243 determines that the IC card 12 has not received the variable corresponding information relating to DGI and Tag or the variable corresponding information relating to Tag (step S101 is YES), the IC card 12 does not perform the processing of the step S102.

Next, the data storage controller 244 determines whether or not the IC card 12 has received a command of store data based on the received command (step S103).

As a result of this determination (step S103), when the data storage controller 244 determines that the IC card 12 has not received the command of store data (Step S103 is NO), the IC card 12 finishes the processing of the present flow.

In addition, when a command other than the command of the variable corresponding information or the command of store data is transmitted from the terminal device 11 to the IC card 12, the IC card 12 receives the relevant command, and performs a processing in accordance with the content of the relevant command.

As a result of the above-described determination (step S103), when the data storage controller 244 determines that the IC card 12 has received the command of store data (step S103 is YES), the IC card 12 perform subsequent processings (processings of step S104 - step S 115).

Here, when a plurality of pairs of DGI and data are included in the received command of store data, the IC card 12 performs the subsequent processings relating to DGI (processings of step S104 - step S109) for the each pair.

To begin with, in the IC card 12, the data storage controller 244 extracts DGI (here, for each DGI) included in the received command of store data. And the data storage controller 244 searches the variable corresponding information storage area 222 (in the present embodiment, the decoding algorithm designation table relating to DGI and Tag) for the extracted DGI (step S104). By this means, the data storage controller 244 determines whether or not DGI coincident with the extracted DGI is included in the variable corresponding information storage area 222 (step S105).

As a result of this determination (step S105), when the data storage controller 244 determines that DGI coincident with the extracted DGI is included in the variable corresponding information storage area 222 (step S105 is YES), the data storage controller 244 determines whether or not that decoding is necessary is associated with the relevant DGI, in the variable corresponding information storage area 222 (step S106).

As a result of this determination (step S106), when the data storage controller 244 determines that that decoding is unnecessary is not associated with DGI, and that the decoding is necessary is associated with DGI (step S106 is YES), the data storage controller 244 determines a decoding algorithm corresponding to the relevant DGI, based on the variable corresponding information relating to DGI and Tag of the variable corresponding information storage area 222. And the decoding controller 242 decodes the data (write data) corresponding to the relevant DGI in the command of store data, in accordance with the determined decoding algorithm (step S107), and the IC card 12 transfers to the processing of a step S110.

On the other hand, as a result of the above-described determination (step S106), when the data storage controller 244 determines that that the decoding is unnecessary is associated with DGI, by (step S106 is NO), the IC card 12 does not decode the data (write data) corresponding to the relevant DGI in the command of store data, and transfers to the processing of the step S 110.

In addition, as a result of the above-described determination (step S105), when the data storage controller 244 determines that DGI coincident with the extracted DGI is not included in the variable corresponding information storage area 222 (step S105 is NO), the data storage controller 244 refers to the information of the standard specification (in the present embodiment, the standard corresponding information relating to DGI and Tag of the standard corresponding information storage area 221). And the data storage controller 244 determines whether or not that decoding is necessary is associated with the extracted DGI, based on the information of the standard specification (step S108)

As a result of this determination (step S108), when the data storage controller 244 determines that the decoding is necessary (step S108 is YES), the IC card 12 determines a decoding algorithm, based on the information of the standard specification. And the decoding controller 242 decodes the data (write data) corresponding to the relevant DGI in the command of store data, in accordance with the determined decoding algorithm (decoding method of the standard specification) (step S109), and the IC card 12 transfers to the processing of the step S110.

On the other hand, as a result of the above-described determination (step S108), when the data storage controller 244 determines that decoding is not necessary (unnecessary) (step S108 is NO), the IC card 12 does not decode the data (write data) corresponding to the relevant DGI in the command of store data, and transfers to the processing of the step S 110.

Subsequently, the IC card 12 performs subsequent processings (processings of step S110 - step S115), by the data storage controller 244.

Here, when a plurality of the TLV parts are included in the received command of store data, the IC card 12 performs the subsequent processings (processings of step S110 - step S115) relating to Tag, for the each TLV part.

To begin with, the data storage controller 244 extracts Tag of the TLV part (here, Tag for the each TLV part) included in the received command of store data. And the data storage controller 244 searches the variable corresponding information storage area 222 (decoding algorithm designation table relating to Tag) for the extracted Tag (step S110). By this means, the data storage controller 244 determines whether or not Tag coincident with the extracted Tag is included in the variable corresponding information storage area 222 (step S111).

As a result of this determination (step S111), when the data storage controller 244 determines that Tag coincident with the extracted Tag is included in the variable corresponding information storage area 222 (step S111 is YES), the data storage controller 244 determines whether or not that decoding is necessary is associated with the relevant Tag, in the variable corresponding information storage area 222 (step S112). Here, since the decoding by Tag is also controlled by DGI in the present embodiment, when that the decoding by Tag is unnecessary is associated with the relevant DGI, in the variable corresponding information storage area 222, the data storage controller 244 determines that decoding is unnecessary is associated with the relevant Tag, regardless of the presence or absence of decoding relating to the relevant Tag.

As a result of this determination (step S112), when the data storage controller 244 determines that that decoding is unnecessary is not associated with Tag, and that decoding is necessary is associated with Tag (step S112 is YES), the data storage controller 244 determines a decoding algorithm corresponding to the relevant Tag, based on the variable corresponding information relating to Tag of the variable corresponding information storage area 222. And the decoding controller 242 decodes the data (write data of the corresponding Value) corresponding to the relevant Tag in the command of store data, in accordance with the determined decoding algorithm (step S113), and the IC card 12 transfers to the processing of a step S114.

On the other hand, as a result of the above-described determination (step S112), when the data storage controller 244 determines that that the decoding is not necessary is associated with Tag (step S112 is NO), the IC card 12 does not decode the data (write data of the corresponding Value) corresponding to the relevant Tag in the command of store data, and transfers to the processing of the step S114.

In addition, as a result of the above-described determination (step S111), when the data storage controller 244 determines that Tag coincident with the extracted Tag is not included in the variable corresponding information storage area 222 (step S111 is NO), the IC card 12 does not decode the data (write data of the corresponding Value) corresponding to the relevant Tag in the command of store data, and transfers to the processing of the step S114.

Subsequently, the IC card 12 performs subsequent processings (processings of step S114 - step S115), by the data storage controller 244.

The data storage controller 2442 determines whether or not the IC card has finished the processings of the step S110 - the step S113 for all Tags (step S114).

As a result of this determination (step S114), when the data storage controller 244 determines that Tag for which the processings of the step S 110 - the step S 113 have not been finished exists (step S 114 is NO), the IC card 12 transfers to the processing of the step S110, and executes the processings of the step S110 - the step S113 to Tag for which the processing has not been finished.

On the other hand, as a result of the above-described determination (step S114), when the data storage controller 244 determines that the IC card 12 has finished the processings of the step S110 - the step S113 for all Tags (step S114 is YES), the data storage controller 244 writes and stores the data (when decoding is unnecessary, the data not decoded) which has been decoded as required in an area of the memory (for example, the EEPROM or the RAM) (step S115).

Here, the IC card 12 once stores the information (for example, DGI and data) of the received command in the reception buffer (for example, the reception buffer 321 shown in Fig. 2), and when the information is necessary, the IC card 12 reads the information from the reception buffer and uses it (for example, DGI in step S104 - step S106, step S108, data in step S107, step S109, Tag in step S110 - step S113, data in step S113, step S115).

In the above-described embodiment, the standard corresponding information relating to DGI and the variable corresponding information relating to DGI have been provided, and the variable corresponding information relating to Tag of the TLV part has been provided. That is, in the above-described embodiment, a case is shown in which, regarding Tag of the TLV part, the standard corresponding information does not exist. But as another configuration example, a configuration in which the standard corresponding information relating to Tag of the TLV part and the variable corresponding information relating to Tag of the TLV part are provided may be used. In this configuration example, as a processing to use the standard corresponding information relating to Tag of the TLV part and the variable corresponding information relating to Tag of the TLV part, the similar processing as the processing using the standard corresponding information relating to DGI and the variable corresponding information relating to DGI may be performed. In addition, in this configuration example, the standard corresponding information relating Tag of the TLV part is stored in the standard corresponding information storage area 121 of the terminal device 11 and the standard corresponding information storage area 221 of the IC card 12.

In the above-described embodiment, a case which the terminal device 11 transmits the command in which the TLV part is included in the data corresponding to DGI, to the IC card 12, has been shown. But, in another configuration example, the terminal device 11 transmits a command in which the TLV part is included in the data corresponding to DGI, or a command in which the TLV part is not included in the data corresponding to DGI to the IC card 12, for example. And the IC card 12 received the command. When the TLV part is included in the received command, the IC card 12 controls the decoding based on DGI and Tag, and when the TLV part is not included in the received command, the IC card 12 controls the decoding based on DGI. The configuration like this may be used.

According to the above-described embodiment, in the IC card 12, the storage section stores third corresponding information (in the embodiment, the variable corresponding information relating to Tag) indicating Tag and third decoding information (in the embodiment, the information of designation relating to encryption and decoding of the data of Value) relating to decoding corresponding to Tag, in a third area (in the embodiment, the variable corresponding information storage area 222). The storage controller (in the embodiment, the variable corresponding information storage controller 243) stores the third corresponding information in the third area. When Tag of a data part of a Tag-Length-Value (TLV) format included in a command received from an outside (in the embodiment, the terminal device 11) is included in the third corresponding information stored in the third area, the IC card controls decoding of the data of Value corresponding to Tag included in the command, based on the third decoding information corresponding to Tag, by the decoding controller 242.

By this means, the IC card 12 performs designation relating to decoding of data, and thereby can improve convenience. As a specific example, the IC card 12 stores the corresponding information including Tag and the decoding information in the variable corresponding information, and can control decoding of data, in accordance with the relevant variable corresponding information.

For example, a user can properly select whether or not to encrypt (whether or not to decode) data of Value of a TLV part to be transmitted from the terminal device 11 to the IC card 12, and an algorithm in the case of performing encryption (an algorithm in the case of performing decoding), in consideration of processing speed and security strength. As a specific example, when the communication channel 13 between the terminal device 11 and the IC card 12 is likely to be intercepted, or when security strength is to be enhanced in another case, it is possible to set to encrypt (decode) data of the whole TLV parts or data of a lot of the TLV parts to be transmitted from the terminal device 11 to the IC card 12. On the other hand, when the communication channel 13 between the terminal device 11 and the IC card 12 is not likely to be intercepted, and is safe, or when it is desired to speedily finish the processing, or when the processing speed is to be enhanced in another case, it is possible to set not to encrypt (not to decode) data of the whole TLV parts or data of a lot of the TLV parts to be transmitted from the terminal device 11 to the IC card 12.

For example, a user can properly select whether or not to encrypt (whether or not to decode) write data to be presented from the terminal device 11 to the IC card 12 by a store data command, and an algorithm in the case of performing encryption (an algorithm in the case of performing decoding), in the light of processing speed and security strength which the user requests.

As an example, a user is an issuer of the IC card 12, and the write data is data such as a full name and a limit amount to be written in the each IC card 12. The user operates the terminal device 11, to notify variable corresponding information from the terminal device 11 to the each IC card 12, and stores the variable corresponding information of each IC card in the variable corresponding information storage area 222.

According to the above-described embodiment, in the IC card 12, the decoding controller 242 further controls decoding of the data of Value corresponding to Tag included in the command, based on the identification information (in the embodiment, DGI) to identify the data included in the command received from the outside.

By this means, the IC card 12 performs designation relating to decoding of the data, to improve convenience. As a specific example, regarding the command including DGI and Tag of the TLV part, the IC card 12 can control decoding of the data, in accordance with DGI and Tag.

According to the above-described embodiment, in the terminal device 11, the communication section 101 transmits a command including the third corresponding information indicating Tag of the data part of a Tag-Length-Value (TLV) format, and the third decoding information relating to decoding corresponding to Tag, to the IC card 12.

By this means, the terminal device 11 notifies the variable corresponding information relating to Tag to the IC card 12, and thereby the terminal device 11 can make the IC card 12 perform control of decoding of data, with a prescribed decoding method (a decoding method specified in the variable corresponding information relating to Tag). As a result, it is possible to improve the convenience of the IC card 12.

According to the above-described embodiment, in the terminal device 11, the communication section 101 transmits a command including Tag of a data part of a Tag-Length-Value (TLV) format and data of Value which has been encrypted based on the third decoding information corresponding to Tag, to the IC card 12.

By this means, the terminal device 11 transmits the command including Tag and the encrypted data, in accordance with the variable corresponding information notified to the IC card 12, to the IC card 12, and thereby the terminal device 11 can make the IC card 12 properly perform control of decoding of the relevant data, in accordance with the relevant variable corresponding information.

In addition, in the above-described embodiment, whether or not the terminal device and the portable electronic device encrypt (decode) Value of the TLV part in the command including DGI and the TLV part depends on DGI and Tag of the TLV part. But, as another configuration example, a configuration may be used in which whether or not the terminal device and the portable electronic device encrypt (decode) Value of the TLV part in the command including DGI and the TLV part depends on Tag of the TLV part, irrespective of DGI.

In this configuration example, as an example, the IC card 12 is provided with an area of the storage section, the storage controller which stores the corresponding information indicating Tag and the decoding information relating to decoding corresponding to Tag in the area of the storage section, and the decoding controller which, when Tag of the data part of a Tag-Length-Value (TLV) format included in a command received from an outside is included in the corresponding information stored in the area of the storage section, controls decoding of data of Value corresponding to Tag included in the command, based on the decoding information corresponding to Tag.

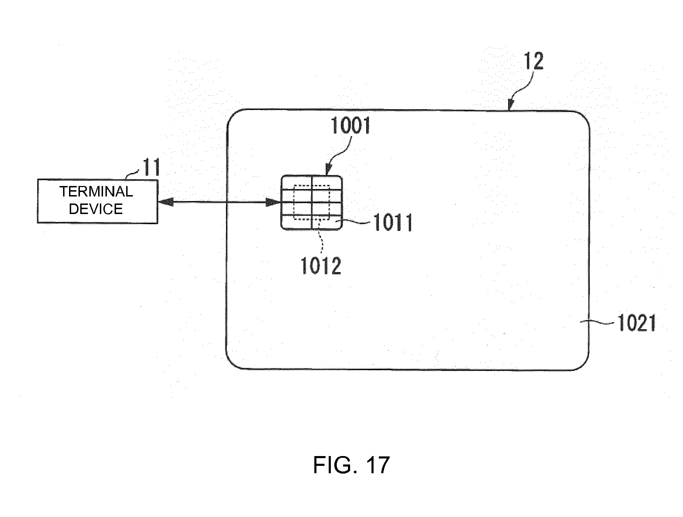

Fig. 17 is an appearance view showing an example of the IC card 12 used in the first embodiment and the second embodiment.

As shown in Fig. 17, the IC card 12 is provided with an IC module 1001. The IC module 1001 is provided with a contact portion 101, and is provided with an IC chip 1012 inside. The IC card 12 is formed by mounting the IC module 1001 on a plastic card substrate (an example of a card main body) 1021, for example. In this manner, the IC card 12 is provided with the IC module 1001 and the card substrate 1021 in which the IC module 1001 is embedded. In addition, the IC card 12 can communicate with the terminal device 11 that is an external device via the contact portion 1011.

The IC card 12 receives a command (processing request) which the terminal device 11 has transmitted, via the contact portion 1011, and executes a processing (command processing) in accordance with the received command. And, the IC card 12 transmits a response (processing response) that is an execution result of the command processing, to the terminal device 11 via the contact portion 1011.

Here, the terminal device 11 is a host device to communicate with the IC card 12, and a reader/writer, for example, and in addition may be another device.

The IC module 1001 is provided with the contact portion 1011 and the IC chip 1012, and is a module which is traded in a shape, such as a COT (Chip On Tape), in which a plurality of the IC modules 1001 are arranged on a tape.

The contact portion 1011 has terminals of various signals required for the IC card 12 to operate. Here, the terminals of the various signals have terminals for receiving supply of a power source voltage, a clock signal, a reset signal and so on from the terminal device 11, and serial data input/output terminals (SIO terminal) for communicating with the terminal device 11, for example. In the terminals which receive supply from the terminal device 11, a power source terminal (VDD terminal, GND terminal), a clock signal terminal (CLK terminal), and a reset signal terminal (RST terminal) are included.

The IC chip 1012 is an LSI (Large Scale Integration) such as a one-chip microprocessor, for example.

In addition, in Fig. 17, the appearance of the IC card 12 which communicates with the terminal device 11 with a contact system using the contact portion 1011 has been shown. As another configuration example, the IC card 12 having a communication function of a contact system and a communication function of a contactless system is further provided with an antenna (and another necessary circuit, if necessary) for performing communication of a contactless system, in addition to the configuration of Fig. 17. In addition, as another configuration example, the IC card 12 which does not have a communication function of a contact system, but has a communication function of a contactless system is provided with an antenna (and another necessary circuit, if necessary) for performing communication of a contactless system.

According to at least one embodiment described above, a portable electronic device has respective functions of, a storage section having a first area and a second area, a storage controller and a decoding controller. The first area stores first corresponding information indicating first identification information to identify data and first decoding information relating to decoding corresponding to the first identification information. The second area stores second corresponding information indicating second identification information to identify data and second decoding information relating to decoding corresponding to the second identification information. The storage controller stores the second corresponding information in the second area. The decoding controller, when identification information to identify data included in a command received from an outside is included in the second corresponding information stored in the second area, controls decoding of the data included in the command, based on the second decoding information corresponding to the second identification information. By this means, the portable electronic device performs designation relating to decoding of data, and thereby can improve convenience.

A program for realizing the functions of the respective devices (for example, the terminal device 11, the IC card 12) according to the embodiments shown above is recorded in a computer readable recording medium, and the program recorded in the recording medium is read and executed by a computer system, and thereby the processing by the function of each device can be performed.

In addition, "the computer system" mentioned here may be one which includes an OS (Operating System), a CPU (Central Processing Unit), a storage device, an input device, an output device, a communication interface, and other hardware such as a peripheral device.

In addition, "the computer readable recording medium" means a portable medium such as a flexible disk, a magneto-optical disk, a ROM, a writable nonvolatile memory such as a flash memory, a DVD (Digital Versatile Disk), or a storage device, such as a hard disk drive, which is to be incorporated in a computer system.

Further, "the computer readable recording medium" shall include one which holds a program for a prescribed time, such as a volatile memory (for example, a DRAM (Dynamic Random Access Memory) inside a computer system that functions as a server or a client, when the program is transmitted via a network such as Internet, or a communication line such as a telephone line.

In addition, the above-described program may be transmitted from a computer system which has stored this program in a storage device or the like to another computer system, via a transmission medium, or by a transmission wave in a transmission medium. Here, "the transmission medium" to transmit a program means a medium having a function to transmit information, such as a network (communication network) such as Internet, or a communication line (communication wire) such as a telephone line.

In addition, the above-described program may be one for realizing a part of the above-described function. Further, the above-described program may be one which can realize the above described function by the combination with a program which has already been recorded in a computer system, that is, a so-called difference file (difference program).

In this manner, each of the function sections may be a software function section, or a hardware function section such as an LSI.

While certain embodiments have been described, these embodiments have been presented by way of example only, and are not intended to limit the scope of the inventions.

## Claims

1. A portable electronic device, comprising:
a storage section having, a first area to store first corresponding information indicating first identification information to identify data and first decoding information relating to decoding corresponding to the first identification information, and a second area to store second corresponding information indicating second identification information to identify data and second decoding information relating to decoding corresponding to the second identification information;
a storage controller to store the second corresponding information in the second area; and
a decoding controller which, when identification information included in a store data command, received from an outside, including the identification information to identify data and data corresponding to the relevant identification information is included in the second corresponding information stored in the second area, controls decoding of the data included in the store data command, based on the second decoding information corresponding to the second identification information.

2. The portable electronic device according to Claim 1, wherein when the identification information included in the store data command received from the outside is not included in the second corresponding information stored in the second area, and the identification information included in the store data command is included in the first corresponding information stored in the first area, the decoding controller controls decoding of the data included in the store data command, based on the first decoding information corresponding to the first identification information.

3. The portable electronic device according to any one of Claim 1 or Claim 2, wherein one or both of the first decoding information and the second decoding information include information to determine presence or absence of decoding.

4. The portable electronic device according to any one of Claim 1 to Claim 3, wherein one or both of the first decoding information and the second decoding information include information to determine a decoding algorithm.

5. The portable electronic device according to any one of Claim 1 to Claim 4, wherein:
the storage section further has a third area to store third corresponding information indicating a Tag and third decoding information relating to decoding corresponding to the Tag;
the storage controller stores the third corresponding information in the third area; and
the decoding controller, when a Tag of a data part of a Tag-Length-Value (TLV) format included in a store data command received from the outside is included in the third corresponding information stored in the third area, controls decoding of data of a Value corresponding to the Tag of the data part included in the store data command, based on the third decoding information corresponding to the Tag.

6. The portable electronic device according to Claim 5, wherein the decoding controller further controls decoding of the data of the Value corresponding to the Tag included in the store data command, based on the second decoding information corresponding to the identification information included in the store data command received from the outside.

7. The portable electronic device according to any one of Claim 1 to Claim 6, wherein:
the storage controller further includes a data storage controller; and
the data storage controller determines whether or not the command received from outside is the store data command, and when the command is the store data command, the data storage controller extracts the identification information, and the data corresponding to the relevant identification information from the command.

8. The portable electronic device according to any one of Claim 1 to Claim 7, further comprising a communication section to receive a command from an outside,
wherein when the communication section receives a corresponding information notification command including a combination of identification information to identify data and decoding information relating to decoding corresponding to the relevant identification information, the storage controller stores corresponding information indicating the identification information and the decoding information relating to decoding corresponding to the relevant identification information in the second area, as the second corresponding information.

9. A program for making a computer execute steps comprising:
a step for storing, as information different from first corresponding information, stored in a first area of a storage section, indicating first identification information to identify data and first decoding information relating to decoding corresponding to the first identification information, second corresponding information indicating second identification information to identify data and second decoding information relating to decoding corresponding to the second identification information, in a second area of the storage section; and
a step for controlling, when identification information to identify data included in a store data command received from an outside is included in the second corresponding information stored in the second area, decoding of the data included in the store data command, based on the second decoding information corresponding to the second identification information.

10. A terminal device, comprising:
a standard corresponding information storage area to store first corresponding information indicating first identification information to identify data, and first decoding information relating to decoding corresponding to the first identification information;
a variable corresponding information storage area to store second corresponding information indicating second identification information to identify data, and second decoding information relating to decoding corresponding to the second identification information; and
a communication section to transmit a corresponding information notification command including the second corresponding information to the portable electronic device.

11. The terminal device according to Claim 10, wherein the communication section transmits a store data command including the second identification information, and encrypted data obtained by encrypting data based on the second decoding information corresponding to the second identification information, to the portable electronic device.

12. The terminal device according to Claim 10 or Claim 11, wherein the communication section transmits a corresponding information notification command including third corresponding information indicating a Tag of a data part of a Tag-Length-Value format, and third decoding information relating to decoding corresponding to the Tag.

13. The terminal device according to Claim 12, wherein the communication section transmits a store data command including the Tag of the data part of the Tag-Length-Value format, and encrypted data of a Value obtained by encrypting data based on the third decoding information corresponding to the Tag, to the portable electronic device.

14. The terminal device according to any one of Claim 1 to Claim 13, wherein the communication section transmits a store data command including identification information to identify data, and data corresponding to the identification information, to the portable electronic device.

15. A program for making a computer execute steps comprising:
a step for transmitting a corresponding information notification command including, as information different from first corresponding information, stored in a portable electronic device, indicating first identification information to identify data and first decoding information relating to decoding corresponding to the first identification information, second corresponding information indicating second identification information to identify data and second decoding information relating to decoding corresponding to the second identification information, to the portable electronic device; and
a step for transmitting a store data command including the second identification information, and encrypted data obtained by encrypting data based on the second decoding information corresponding to the second identification information, to the portable electronic device.
